# EUROPÄISCHE PATENTSCHRIFT

(11) **EP 3 797 129 B1**
(45) Veröffentlichungstag und Bekanntmachung des Hinweises auf die Patenterteilung: **17.07.2024**
(21) Anmeldenummer: 19739379.6
(22) Anmeldetag: 21.05.2019
(51) Int. Cl.: C08G 63/668

(54) **NICHTIONISCHE SOIL RELEASE POLYESTER UND DEREN VERWENDUNG**
NONIONIC SOIL RELEASE POLYESTER AND USE THEREOF
POLYESTERS ANTISALISSURES NON IONIQUES ET LEUR UTILISATION

(30) Priorität: 22.05.2018 DE 102018004071
(43) Veröffentlichungstag der Anmeldung: 31.03.2021
(73) Patentinhaber: Scholz, Gertraud, 63755 Alzenau (DE)
(72) Erfinder: Scholz, Gertraud, 63755 Alzenau (DE)
(74) Vertreter: Völger, Karl Wolfgang
(86) Internationale Anmeldenummer: PCT/IB2019/054178
(87) Internationale Veröffentlichungsnummer: WO 2019/224708

(56) Entgegenhaltungen:
- EP-A1- 2 431 456

## Beschreibung

Die Erfindung betrifft nichtionische aromatische Polyester, enthaltend Struktureinheiten, abgeleitet von Isosorbid, Granulate, feste und flüssige Zusammensetzungen sowie Dispersionen, enthaltend diese Polyester, sowie deren Verwendungen.

Der Einsatz von Polyestern in Waschmitteln zur Verbesserung der Schmutzablösung von Textilien, zur Reduzierung der Wiederanschmutzung, zum Schutz der Fasern bei mechanischer Belastung und zum Ausrüsten der Gewebe mit einem Antiknittereffekt, aber auch zur Modifizierung hydrophober Oberflächen bei der Papierherstellung, ist bekannt.

EP 2 885 335 A1 beschreibt die Verwendung von Polyestern zur Modifizierung hydrophober Oberflächen, insbesondere in Papier- und Kartonherstellungsprozessen, insbesondere in Prozessen zum Recyceln von Papier und Karton, sowie in der Textil-, Zellstoff- und Druck-Industrie. Die Polyester sind dadurch gekennzeichnet, dass die Polyester erhältlich sind durch Polykondensation von a) einer oder mehreren sulfogruppenfreien, aromatischen Dicarbonsäuren und/oder deren Salzen und/oder deren Anhydriden und/oder deren Estern, b) Ethylenglykol, c) 1,2-Propylenglykol, d) einem oder mehreren Polyalkylenglykolen und e) einer oder mehreren Verbindungen der Formel R¹O(CHR²CHR³O)ₙH, wobei R¹ für eine lineare oder verzweigte, gesättigte oder ungesättigte Alkylgruppe mit 1 bis 22 C-Atomen steht, vorzugsweise Methyl, R² und R³ unabhängig voneinander für Wasserstoff oder für eine Alkylgruppe mit 1 bis 4 Kohlenstoffatomen, vorzugsweise für Wasserstoff und/oder Methyl, stehen und n eine Zahl von 1 bis 50 ist.

EP 0 964 015 A1 lobt eine verbesserte Soil Release Eigenschaft von Oligoestern aus, die durch Polykondensation von Dicarbonsäuren, mehrwertigen Alkoholen, Ethylen- und/oder 1,2-Propylenglykol und Polyalkylenglykolen erhalten werden und die durch Alkylpolyethylenglykole und/oder Arylpolyethylenglykole endverschlossen sind.

EP 1 805 270 A1 offenbart wässrige Pigmentdispersionen, enthaltend nichtionische Oligoester aus Terephthalat-, Ethylenoxid- 1,2-Propylenoxid- und Poly-(C₁-C₄-alkylen)-glycol-Einheiten, die gegebenenfalls endgruppenverschlossen sind.

Aus den Anmeldungen EP 0 185 427 A2, EP 0 241 984 A2, EP 0 241 985 A2 und EP 0 272 033 A2 sind Polyesterkondensate von mehrwertigen aromatischen Carbonsäuren mit zweiwertigen Alkoholen und einseitig verschlossenen C₁-C₄-Polyethern bekannt, die die Schmutzablösung von Polyestergeweben fördern. Diese Polyesterkondensate sind häufig in Wasser beziehungsweise in flüssigen Waschmittelformulierungen nicht vollständig löslich, sondern lediglich dispergierbar.

Waschmittelformulierungen enthaltend solche Polyester zeigen häufig eine Vergrauung des Waschgutes in Gegenwart von Mineralöl/Pigment-Schmutzgewebe.

In EP 2 431 456 A1 werden nichtionische und anionische Polyester beschrieben, die ein Strukturelement, abgeleitet von hydrierten und zweifach dehydratisierten Aldo- und Ketohexosen, insbesondere von Isosorbid, enthalten. Am Beispiel wird gezeigt, dass bei Zugabe eines nichtionischen Polyesters zu einem Flüssigwaschmittel unmittelbar beim Start des maschinellen Waschprozesses eine gute Primärwaschleistung bei einer Waschtemperatur von 30 °C erreicht wird. Das Löslichkeitsverhalten, insbesondere in hochkonzentrierten Flüssigwaschmittelformulierungen, die Kompatibilität mit Waschmittelinhaltsstoffen, sowie das Hydrolyseverhalten in Flüssigwaschmittel enthaltend diese Polyester sind nicht beschrieben.

Gesucht sind daher Polyester, die eine im Vergleich zum Stand der Technik verstärkte Modifikation von hydrophoben Oberflächen, wie beispielsweise Polyestergewebe, bewirken, zugleich ausreichend stabil gegen Hydrolyse, bevorzugt auch im alkalischen Medium, sowie bei Temperaturen vorzugsweise unterhalb von 30 °C wasserlöslich sind. Die Polyester sollen in flüssige und feste Zusammensetzungen sowie in Dispersionen formulierbar sein.

Der vorliegenden Erfindung liegt somit die Aufgabe zugrunde, diese gesuchten Polyester bereitzustellen und Verwendungen dieser gesuchten Polyester anzugeben.

Diese Aufgabe wird in einem ersten Aspekt der vorliegenden Erfindung durch nichtionische aromatische Polyester gelöst, enthaltend
i) mindestens eine Struktureinheit der Formel (I) 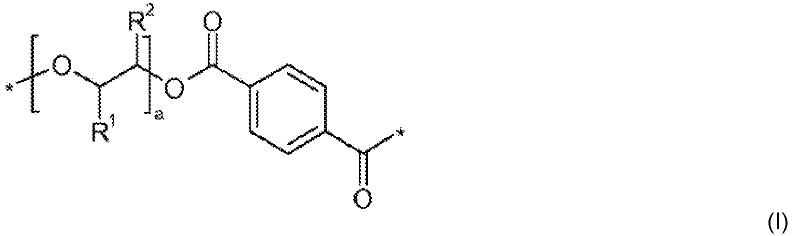 worin
   - R¹, R²: unabhängig voneinander jeweils für Wasserstoff oder für eine Methylgruppe steht,
   - a: für eine Zahl von 0 bis 20 steht
ii) mindestens eine Struktureinheit der Formel (IIa) und/oder (IIb)

   -(-CH₂-CH₂-O-)_{b}-(-CHR³-CHR⁴-O)_{c}-R⁵ (IIa)

   -(-CHR³-CHR⁴-O-)_{c}-(-CH₂-CH₂-O)b-R⁵ (IIb)

   worin
   - R³, R⁴: unabhängig voneinander jeweils für Wasserstoff oder eine Methylgruppe steht,
   - R⁵: für eine C₁-C₂₂-n-Alkylgruppe oder C₃-C₂₂-iso-Alkylgruppe steht,
   - b, c: unabhängig voneinander jeweils für eine Zahl von 1 bis 60 stehen,
   wobei die Gruppen der Formel (IIa) und/oder (IIb) statistisch verteilt oder blockweise angeordnet sein können,
iii) mindestens eine Struktureinheit, abgeleitet von Isosorbid der Formel (III) 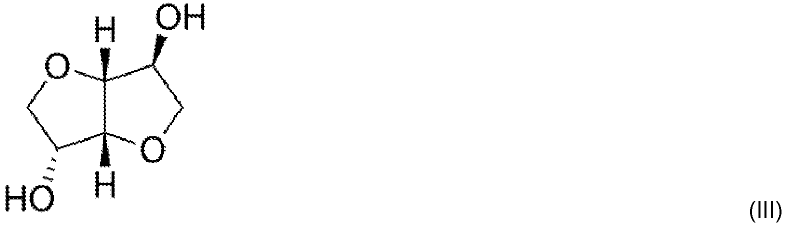 wobei in dem nichtionischen aromatischen Polyester 4 bis 9 Struktureinheiten der Formel (I) vorhanden sind.

Wenn die Struktureinheit der Formel (I), insbesondere die nachstehend angegebene Terephthalat-Einheit der Formel (la), im erfindungsgemäßen nichtionischen aromatischen Polyester 4 bis 9 mal vorhanden ist, wird die beste Wirkung der erfindungsgemäßen nichtionischen aromatischen Polyester auf hydrophobe Oberflächen erzielt.

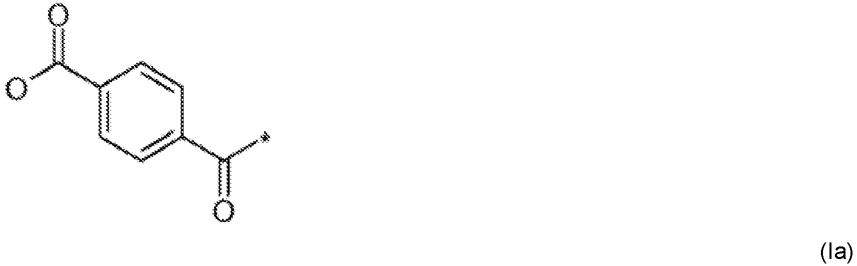

Wenn der Index a in der Struktureinheit der Formel (I) 0 ist, schließt sich an die Terephthalat-Einheit eine Struktureinheit, abgeleitet von Isosorbid an. Diese erfindungsgemäßen nichtionischen aromatischen Polyester enthalten dann keine weiteren Strukturelemente abgeleitet von Ethylenglycol oder 1,2-Propylenglycol.

Es wurde somit überraschend gefunden, dass nichtionische aromatische Polyester, enthaltend 4 bis 9 Struktureinheiten des Terephthalates gemäß Formel (I), mindestens eine Struktureinheit, abgeleitet von Isosorbid, sowie nichtionische Endgruppen, abgeleitet von Alkylpolyalkylenglycol, eine im Vergleich zum Stand der Technik signifikant stärkere Wirkung auf feste Oberflächen haben, die Eigenschaften von Oberflächen für verschiedene Anwendungen vorteilhaft verändern und in wässrigen Zusammensetzungen stabil sind.

Die erfindungsgemäßen nichtionischen aromatischen Polyester werden nach an sich bekannten Verfahren wie in EP 0 964 015 A1 beschrieben durch Polykondensation, durch Veresterung beziehungsweise durch Umesterung von Terephthalsäurester, Isosorbid, Alkylpolyalkylenglykol und gegebenenfalls weiteren Monomeren und gegebenenfalls einem Vernetzer als farblose bis gelblich beige Flüssigkeiten oder plastifizierbare Feststoffe oder nicht verformbare Feststoffe erhalten.

Gemäß der Erfindung ist ein nicht verformbarer Feststoff dadurch gekennzeichnet, dass er bei 25 °C und 1013 mbar im festen Aggregatzustand vorliegt.

Die vorliegende Erfindung hat den Vorteil, dass die erfindungsgemäßen nichtionischen aromatischen Polyester nicht hygroskopisch sind und in Gegenwart von Wasser hydrolysestabil und daher in wässrigen Zusammensetzungen stabil sind. Sie sind gut wasserlöslich, auch bei Temperaturen unterhalb von 30 °C, und zeigen eine ausgeprägte Tendenz auf Oberflächen von Materialien mit ausgeprägtem hydrophobem Verhalten, wie Polyestergewebe, Filze, Siebe und Walzen, zu adsorbieren und damit die Grenzflächenspannung zwischen Oberfläche und Wasser zu reduzieren, so dass die Oberflächen hydrophiler werden.

Die erfindungsgemäßen nichtionischen aromatischen Polyester können mit Tensiden kombiniert werden, vorzugsweise mit linearen Alkylbenzolsulfonaten (LAS), sekundären Alkansulfonaten (SAS), Ethersulfaten, Oxalkylaten, insbesondere Fettalkoholalkoxylaten, und quaternären Ammoniumverbindungen, vorzugsweise Esterquats, und entfalten eine ausgezeichnete Primärwaschleistung und einen guten Soil Release Effekt beim Waschen von Textilien mit Zusammensetzungen enthaltend diese erfindungsgemäßen Polyester.

Unter Primärwaschleistung wird im Sinne der vorliegenden Erfindung eine hohe Waschwirkung gegenüber fettigen, öligen Anschmutzungen verstanden.

Der Begriff "Soil Release" wird in der vorliegenden Erfindung für eine erleichterte Entfernung von Schmutz beziehungsweise dessen erleichterte Auswaschbarkeit verwendet.

Die erfindungsgemäßen nichtionischen aromatischen Polyester werden aufgrund ihrer strukturellen Verwandtschaft von Polyestergewebe oder polyesterhaltigem Mischgewebe gut aus einer wässrigen Lösung oder einer Waschflotte adsorbiert und bilden auf dem hydrophoben Gewebe einen hydrophilen Film aus. Dieser bewirkt, dass die Affinität des Gewebes gegenüber hydrophobem Öl- und Fettschmutz reduziert wird. Gleichzeitig wird die Benetzbarkeit des Polyestergewebes mit der wässrigen Waschflotte verbessert. Beides führt zu einer leichteren Ablösung von öligen oder fettigen Anschmutzungen, die normalerweise von Polyestergewebe sehr schwer zu entfernen sind. Darüber hinaus wird der Feuchtigkeitstransport (Wasserabsorption und Saugfähigkeit) in den behandelten hydrophoben Geweben, wie Polyester oder Polyester/Baumwollmischgewebe, deutlich verbessert, was die Trageeigenschaften positiv beeinflusst.

Die erfindungsgemäßen nichtionischen aromatischen Polyester reduzieren das hydrophobe Verhalten, insbesondere von Polyesteroberflächen, und bewirken, dass Anklebungen von hydrophobem Material, beispielsweise von Kleberückständen im Papierrecyclingverfahren auf Maschinenteilen, beispielsweise auf Filzdeckel-Presswalzen, verhindert werden.

Die erfindungsgemäßen nichtionischen aromatischen Polyester können in einem zweiten Aspekt der vorliegenden Erfindung, vorzugsweise zusammen mit weiteren Komponenten, bevorzugt aus der Gruppe der Tenside, Füllstoffe und Polycarboxylate und Polysaccharide, als Granulate dargeboten werden. Bevorzugte Tenside sind Fettalkoholalkoxylate, vorzugsweise mit hohem Ethoxylierungsgrad mit mehr als 10 EO-Einheiten, Fettsäurealkoxylate, lineare Alkylbenzolsulfonate (LAS), sekundäre Alkansulfonate (SAS), Ethersulfate und quaternäre Ammoniumverbindungen, wie Esterquats. Bevorzugte Füllstoffe sind Na₂SO₄. Als Builder sind bevorzugt Polycarboxylate, insbesondere der Poly(meth)acrylsäure, beispielsweise Sokalan^{®} CP5 oder Sokalan^{®} CP45, oder Polysacharide, insbesondere Carboxymethylcellulose, Methylcellulose, Ethylcellulose, Hydroxyethylcellulose, Hydroxypropylcellulose, Methylethylcellulose, Hydroxyethylmethylcellulose, Hydroxypropylmethylcellulose, Ethylhydroxycellulose und Carboxypropylmethylcellulose.

Sehr bevorzugt haben die erfindungsgemäßen Granulate einen mittleren Granulatdurchmesser X_{50,3} von 0,05 mm bis 3 mm, bevorzugt 0,08 mm bis 2,0 mm, besonders bevorzugt 0,1 mm bis 1,5 mm. Diese Granulate haben bei 20 °C einen festen Aggregatszustand und behalten somit das Volumen und die Form bei und zeichnen sich weiter dadurch aus, dass sie nicht klebrig sind und nicht agglomerieren, beispielsweise infolge von elektrostatischer Aufladung infolge von Reibung mit Feststoffkomponenten.

Die vorstehende Aufgabe wird in weiteren Aspekten der vorliegenden Erfindung durch eine flüssige Zubereitung, enthaltend die erfindungsgemäßen nichtionischen aromatischen Polyester, durch eine feste Zubereitung, enthaltend die erfindungsgemäßen nichtionischen aromatischen Polyester, sowie die Verwendung der erfindungsgemäßen nichtionischen aromatischen Polyester zur Herstellung eines flüssigen Wasch- und Reinigungsmittels, die Verwendung der erfindungsgemäßen nichtionische aromatische Polyester zur Herstellung eines festen Wasch- und Reinigungsmittels, die Verwendung der erfindungsgemäßen nichtionischen aromatischen Polyester zur Herstellung eines Wasch- und Reinigungsmittels in Mehrkammersystemen, die sowohl flüssig/flüssig, als auch fest/flüssig und fest/fest in Form von Pouches oder Tabletten sein können, ebenso die Verwendung der erfindungsgemäßen nichtionische aromatische Polyester zur Herstellung einer Pigmentdispersion, die Verwendung der erfindungsgemäßen nichtionischen aromatischen Polyester für Papierherstellverfahren und die Verwendung der erfindungsgemäßen nichtionische aromatische Polyester zur Verbesserung des Druckverhaltens von ölbasierenden Druckfarben auf hydrophoben Oberflächen.

Nachstehend wird die vorliegende Erfindung im Detail beschrieben.

Der erste Aspekt der vorliegenden Erfindung betrifft nichtionische aromatische Polyester, enthaltend
i) mindestens eine Struktureinheit der Formel (I) 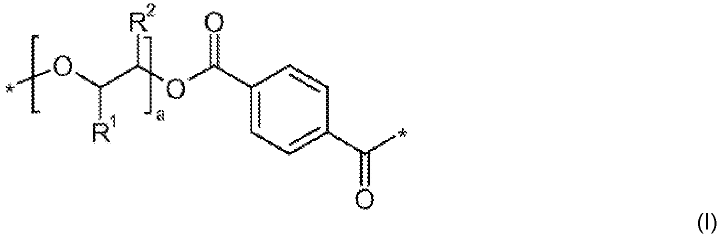 worin
   - R¹, R²: unabhängig voneinander jeweils für Wasserstoff oder für eine Methylgruppe steht,
   - a: für eine Zahl von 0 bis 20 steht
ii) mindestens eine Struktureinheit der Formel (IIa) und/oder (IIb)

   -(-CH₂-CH₂-O-)_{b}-(-CHR³-CHR⁴-O)_{c}-R⁵ (IIa)

   -(-CHR³-CHR⁴-O-)_{c}-(-CH₂-CH₂-O)b-R⁵ (IIb)

   worin
   - R³, R⁴: unabhängig voneinander jeweils für Wasserstoff oder für eine Methylgruppe steht,
   - R⁵: für eine C₁-C₂₂-n-Alkylgruppe oder C₃-C₂₂-iso-Alkylgruppe steht,
   - b, c: unabhängig voneinander jeweils für eine Zahl von 1 bis 60 stehen,
   wobei die Gruppen der Formel (IIa) und/oder (IIb) statistisch verteilt oder blockweise angeordnet sein können,
iii) mindestens eine Struktureinheit, abgeleitet von Isosorbid der Formel (III) 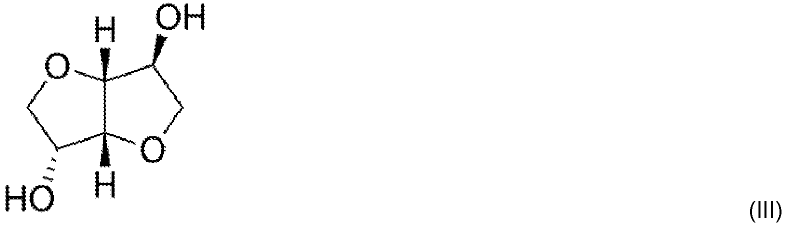 wobei in dem nichtionischen aromatischen Polyester 4 bis 9 Struktureinheiten der Formel (I) vorhanden sind.

Dem Fachmann ist bekannt, dass die in eckiger Klammer dargestellte Gruppe der Struktureinheit der Formel (I) Strukturelemente bedeutet, die sich ableiten von Ethylenglykol und/oder 1,2-Propylenglykol. Diese Strukturelemente, abgeleitet von Ethylenglykol und 1,2-Propylenglykol, können statistisch verteilt oder blockartig angeordnet sein.

Die erfindungsgemäßen nichtionischen, aromatischen Polyester haben eine ausgeprägte Tendenz, auf hydrophobe Oberflächen zu adsorbieren, so dass diese hydrophiler werden. Die Hydrophilisierung von festen Oberflächen kann für verschiedene Anwendungen genutzt werden. Textilien aus Polyester oder Polyestermischgeweben zeigen nach der Behandlung mit dem erfindungsgemäßen nichtionischen, aromatischen Polyester eine verbesserte schmutzabweisende Wirkung. Die erfindungsgemäßen nichtionischen, aromatischen Polyester zeigen, insbesondere gegenüber öligen Verschmutzungen, eine verbesserte Primärwaschwirkung und verhindern Ablagerungen fester, insbesondere hydrophober Partikel auf Oberflächen, die mit den erfindungsgemäßen nichtionischen aromatischen Polyestern behandelt wurden. Die erfindungsgemäßen nichtionischen aromatischen Polyester zeigen ein ausgeprägtes Dispergiervermögen. Sie sind wasserlöslich, nicht hygroskopisch und hydrolysestabil.

Eine bevorzugte Ausführungsform der Erfindung betrifft nichtionische aromatische Polyester, bei denen das Molverhältnis von i) zu iii) 30 zu 1 bis 1 zu 10, bevorzugt 20 zu 1 bis 1 zu 5, besonders bevorzugt 15 zu 1 bis 1 zu 3 ist.

Diese erfindungsgemäßen nichtionischen aromatischen Polyester zeigen ein vorteilhaftes Adsorptionsverhalten auf feste hydrophobe Oberflächen, reduzieren Ablagerungen hydrophober Stoffe und haben eine außerordentlich starke Soil Release Wirkung und Primärwaschleistung.

Eine weitere bevorzugte Ausführungsform der Erfindung betrifft nichtionische aromatische Polyester, enthaltend die mindestens eine Struktureinheit der Formel (I), worin R¹, R² jeweils für Wasserstoff und a für eine Zahl von 1 bis 20, bevorzugt 1 bis 10, besonders bevorzugt 1 bis 5, steht

Die in eckiger Klammer dargestellte Gruppe der Struktureinheit der Formel (I) bedeutet in dieser Ausführungsform Strukturelemente, die sich von Ethylenglykol ableiten.

Diese erfindungsgemäßen nichtionischen aromatischen Polyester zeichnen sich durch eine gute Granulierbarkeit aus.

Eine weitere Ausführungsform der Erfindung sind nichtionische aromatische Polyester, enthaltend die mindestens eine Struktureinheit der Formel (I),worin R¹ für Wasserstoff und R² für eine Methylgruppe oder R² für Wasserstoff und R¹ für eine Methylgruppe steht und a für eine Zahl von 1 bis 20, bevorzugt 1 bis 10, besonders bevorzugt 2 bis 6, steht.

Die in eckiger Klammer dargestellte Gruppe der Struktureinheit der Formel (I) bedeutet in dieser Ausführungsform Strukturelemente, die sich von sich von 1,2-Propylenglykol ableiten.

Diese erfindungsgemäßen nichtionischen aromatischen Polyester zeichnen sich durch eine gute Wasserlöslichkeit auch bei Temperaturen unterhalb von 30 °C und ein gutes Soil Release Vermögen aus.

Eine weitere bevorzugte Ausführungsform der Erfindung sind nichtionische aromatische Polyester, enthaltend die mindestens eine Struktureinheit der Formel (I), worin R¹, R² unabhängig voneinander jeweils für Wasserstoff oder eine Methylgruppe steht, wobei die Struktureinheit mindestens eine Methylgruppe enthalten muss, und a für eine Zahl von 1 bis 20 steht.

Die in eckiger Klammer dargestellte Gruppe der Struktureinheit der Formel (I) bedeutet in dieser Ausführungsform Strukturelemente, die sich von sich von Ethylenglycol und von 1,2-Propylenglykol ableiten, die statistisch verteilt oder blockartig angeordnet sein können.

Diese erfindungsgemäßen nichtionischen aromatischen Polyester zeigen eine gute Wasserlöslichkeit, ein gutes Soil Release Vermögen und eine gute Primärwaschleistung sowie eine gute Granulierbarkeit.

Eine besonders bevorzugte Ausführungsform der Erfindung sind nichtionische aromatische Polyester, enthaltend die Struktureinheit der Formel (I), wobei die in eckiger Klammer dargestellte Gruppe der Struktureinheit der Formel (I) in dieser Ausführungsform Strukturelemente bedeutet, die abgeleitet sind von Ethylenglycol (EO) und die abgeleitet sind von 1,2-Propylenglycol (PO), wobei das Verhältnis EO zu PO 1 zu 19 bis 19 zu 1, bevorzugt 1 zu 10 bis 10 zu 1, besonders bevorzugt 1 zu 5 bis 5 zu 1, sein kann.

Diese erfindungsgemäßen nichtionischen aromatischen Polyester zeichnen sich durch eine geringe Tendenz zur Kristallinität und gute Soil Release Wirkung bei ausreichender Wasserlöslichkeit aus und sind auch im pH Bereich von 6 bis 9, bevorzugt 7 bis 8, hydrolysestabil.

Eine andere bevorzugte Ausführungsform der Erfindung betrifft nichtionische aromatische Polyester, bei denen in der Formel (Ila) und der Formel (IIb) R³ für Wasserstoff und R⁴ und R⁵ für Methyl stehen, der Index b für eine Zahl von 3 bis 60, bevorzugt 4 bis 50, und der Index c für eine Zahl von 0 bis 10, bevorzugt 2 bis 8, steht.

Diese erfindungsgemäßen nichtionischen aromatischen Polyester zeigen eine ausgezeichnete Soil Release Wirkung, eine sehr gute Hydrolysestabilität in wässrigen Zusammensetzungen im pH Bereich von 7 bis 8,5 und ein außerordentliches Primärwaschleistung.

Eine weitere besonders bevorzugte Ausführungsform der Erfindung betrifft nichtionische aromatische Polyester, bei denen in der Formel (Ila) und der Formel (IIb) R³ für Wasserstoff und R⁴ und R⁵ für Methyl stehen, der Index b für eine Zahl von 10 bis 55, bevorzugt 12 bis 45, und der Index c für eine Zahl von 1 bis 10, bevorzugt 3 bis 8, besonders bevorzugt 4 bis 7, steht.

Diese erfindungsgemäßen nichtionischen aromatischen Polyester zeichnen sich durch eine gute Kompatibilität mit Tensiden sowie durch eine sehr gute Primärwaschleistung aus. Die erfindungsgemäßen nichtionischen aromatischen Polyester bewirken gleiches Waschvermögen bei reduziertem Tensidgehalt.

Eine weitere bevorzugte Ausführungsform der Erfindung betrifft nichtionische aromatische Polyester, bei denen ii) ausschließlich für die Formel IIa steht, wobei R³ und R⁴ für Wasserstoff und R⁵ für Methyl stehen und der Index b für eine Zahl von 3 bis 45, bevorzugt 4 bis 35 und besonders bevorzugt 5 bis 18, steht.

Diese erfindungsgemäßen nichtionischen aromatischen Polyester zeichnen sich durch ein ausgezeichnetes Adsorptionsverhalten auf hydrophoben Oberflächen aus, beispielsweise auf Polyestergewebe. Die hydrophoben Eigenschaften der mit den erfindungsgemäßen nichtionischen aromatischen Polyestern behandelten Oberflächen werden dahingehend verändert, dass diese hydrophiler werden und Anhaftungen hydrophober Materialien, beispielsweise Klebemittel, reduziert werden.

In einer außerordentlich bevorzugten Ausführungsform der Erfindung bestehen die erfindungsgemäßen nichtionischen aromatischen Polyester aus i), ii) und iii).

Diese erfindungsgemäßen nichtionischen aromatischen Polyester zeichnen sich durch eine gute Löslichkeit in Wasser aus. Bei der Herstellung dieser Polyester kann eine Gelierung der Reaktionsschmelze unterbunden werden. Die Molekulargewichte der erfindungsgemäßen nichtionischen aromatischen Polyester liegen in einem engen Bereich (narrow range).

Eine weitere ebenso bevorzugte Ausführungsform der Erfindung betrifft nichtionische aromatische Polyester, enthaltend neben i), ii) und iii) ferner Struktureinheiten weiterer Diole, vorzugsweise n-Butylenglycol, i-Butylenglykol oder t-Butylenglycol.

Diese nichtionischen aromatischen Polyester zeichnen sich durch eine gute Plastifizierbarkeit aus.

Weitere ebenso bevorzugte Ausführungsform der Erfindung betrifft nichtionische aromatische Polyester, enthaltend ferner Struktureinheiten der Isophthalsäure.

Diese erfindungsgemäßen nichtionischen aromatischen Polyester zeichnen sich durch eine starke Tendenz aus, auf hydrophobe Oberflächen zu adsorbieren, bevorzugt auf Polyestergewebe oder Polyestermischgewebe.

Eine weitere ebenso bevorzugte Ausführungsform der Erfindung betrifft nichtionische aromatische Polyester, enthaltend ferner Struktureinheiten von polyfunktionellen Einheiten, die bei der Herstellung der erfindungsgemäßen nichtionischen aromatischen Polyestern durch Polykondensation vom i), ii) und iii) sowie ggfs weiterer Komponenten, beispielsweise 1,4-Cyclohexandicarbonsäure als Vernetzer eingesetzt wurden.

Als Vernetzer in Betracht kommen beispielsweise Glycerin, Pentaerythrit, 1,2,3-Hexantriol, Sorbit oder Mannit. Ebenso in Betracht kommen mehrwertige aromatische Carbonsäuren, vorzugsweise Benzol-1,2,3-tricarbonsäure (Hemimellithsäure), Benzol-1,2,4-tricarbonsäure (Trimellithsäure) und Benzol-1,3,5-tricarbonsäure (Trimesithsäure).

Diese erfindungsgemäßen nichtionischen aromatischen Polyester zeichnen sich dadurch aus, dass sie nicht klebrig sind.

Eine ebenso besonders bevorzugte Ausführungsform der Erfindung betrifft nichtionische aromatische Polyester, bei denen das zahlenmittlere Molekulargewicht des einen nichtionischen aromatischen Polyesters 1.500 g/mol bis 12.000 g/mol, bevorzugt 1.800 g/mol bis 10.000 g/mol, besonders bevorzugt 2.000 g/mol bis 6.000 g/mol, außerordentlich bevorzugt 2.500 g/mol bis 5.000 g/mol, beträgt. Das zahlenmittlere Molekulargewicht wird mittels Größenausschlusschromatographie in wässriger Lösung unter Verwendung einer Kalibrierung mit Hilfe eng verteilter Polyacrylsäure-Na-Salz-Standards bestimmt.

Diese erfindungsgemäßen nichtionischen aromatischen Polyester zeichnen sich durch eine ausgezeichnete Primärwaschleistung und einen guten Soil Release Effekt auch bei Waschtemperaturen unterhalb von 40 °C, bevorzugt bei 30 °C und unterhalb von 30 °C, besonders bevorzugt bei 25 °C und unterhalb von 25 °C aus, im Vergleich zu nichtionischen, aromatischen Polyester mit zahlenmittleren Molekulargewichten oberhalb von 12.000 g/mol.

Eine weitere bevorzugte Ausführungsform der Erfindung betrifft nichtionische aromatische Polyester, welche ferner Struktureinheiten, abgeleitet von einem oder mehreren Polyalkylenglykolen, enthalten.

Diese erfindungsgemäßen nichtionischen aromatischen Polyester zeichnen sich durch ein hohes Dispergiervermögen aus.

Eine weitere besonders bevorzugte Ausführungsform der Erfindung betrifft nichtionische aromatische Polyester, ferner enthaltend Struktureinheiten, abgeleitet von einem oder mehreren Polyethylenglykolen (PEG) mit zahlenmittleren Molekulargewichten von ca. 200 g/mol bis 8.000 g/mol und/oder von einem oder mehreren Polypropylenglykolen mit zahlenmittleren Molekulargewichten von ca. 200 g/mol bis 8.000 g/mol und/oder von einem oder mehreren Polypropylenethylenglykol mit zahlenmittleren Molekulargewichten von ca. 200 g/mol bis 8.000 g/mol.

Diese erfindungsgemäßen nichtionischen aromatischen Polyester zeichnen sich durch ein hohes Dispergiervermögen aus und adsorbieren leicht auf hydrophobe Oberflächen. Zusätzlich verbessern diese erfindungsgemäßen nichtionischen aromatischen Polyester die Antistatik- und die Gleit-Eigenschaften von Polyestergewebe und Polyestermischgewebe.

Eine weitere außerordentlich bevorzugte Ausführungsform der Erfindung betrifft nichtionische aromatische Polyester, welche ferner Struktureinheiten, abgeleitet von einem oder mehreren Polyethylenglycolen (PEGs), vorzugsweise mit zahlenmittleren Molekulargewichen von 120 g/mol bis 3.000 g/mol enthalten, insbesondere Strukturelemente abgeleitet von PEG 200, PEG 300, PEG 400, PEG 600, PEG 800, PEG 1500, PEG 3000, außerordentlich bevorzugt von PEG 1500. Der der Abkürzung PEG folgende Zahlenwert gibt die mittlere relative Molekülmasse des PEG an.

Diese erfindungsgemäßen nichtionischen aromatischen Polyester zeichnen sich dadurch aus, dass diese die Oberflächenspannung hydrophober Oberflächen, beispielsweise von Polyestergewebe, Karton und Papier, aber auch Filze, Siebe und Walzen signifikant erhöhen und die Oberflächen hydrophiler werden. Zudem sind diese erfindungsgemäßen nichtionischen aromatischen Polyester sehr gut wasserlöslich und können auch in hohen Konzentration, vorzugsweise in Gewichtsmengen von 10 % bis 70 % bezogen auf die fertige Zusammensetzung, in wässrige Zusammensetzungen eingearbeitet werden.

Eine weitere sehr besonders bevorzugte Ausführungsform der Erfindung betrifft nichtionische aromatische Polyester, welche explizit keine Struktureinheiten, abgeleitet von einem oder mehreren Polyethylenglykolen (PEG) mit zahlenmittleren Molekulargewichten unterhalb von 1.000 g/mol, enthalten.

Diese erfindungsgemäßen nichtionischen aromatischen Polyester zeichnen sich durch ein günstiges toxikologische und ökotoxikologisches Verhalten aus.

Die erfindungsgemäßen nichtionischen aromatischen Polyester können, vorzugsweise zusammen mit weiteren Komponenten, als Granulate mit einem mittleren Granulatdurchmesser X_{50,3} von 0,05 mm bis 2 mm, bevorzugt 0,08 mm bis 1,8 mm, besonders bevorzugt 0,1 mm bis 1,5 mm dargeboten werden. Diese Granulate haben bei 20 °C einen festen Aggregatszustand und behalten somit das Volumen und die Form bei und zeichnen sich weiter dadurch aus, dass sie nicht klebrig sind und nicht agglomerieren, beispielsweise infolge von elektrostatischer Aufladung infolge von Reibung mit Feststoffkomponenten.

Die vorstehenden Ausführungen und Bevorzugungen im Hinblick auf die erfindungsgemäßen nichtionischen aromatischen Polyester gelten für die nachstehend beschriebenen Granulate, Zusammensetzungen und Verwendungen entsprechend. Ebenso gelten die nachstehenden Ausführungen und Bevorzugungen im Hinblick auf die Zusammensetzungen und Verwendungen für die entsprechenden erfindungsgemäßen nichtionischen aromatischen Polyester.

Vier weitere Aspekte der vorliegenden Erfindung betreffen Granulate, feste Zusammensetzungen, flüssige Zusammensetzungen sowie Dispersionen enthaltend die erfindungsgemäßen nichtionischen aromatischen Polyester.

Ein Aspekt der vorliegenden Erfindung betrifft Granulate mit einem mittleren Granulatdurchmesser X_{50,3} von 0,05 mm bis 2 mm, bevorzugt 0,08 mm bis 1,8 mm, besonders bevorzugt 0,1 mm bis 1,5 mm, enthaltend einen oder mehrere der erfindungsgemäßen nichtionischen aromatischen Polyester.

Bei dem mittleren Partikeldurchmesser X_{50,3} handelt es sich um das Volumenmittel der Partikel, gemessen nach Lagerung der Feststoffpartikel im Klimaschrank für 24 Stunden bei 30 °C und 50 % relativer Luftfeuchtigkeit. Die Ermittlung der Teilchengrößen erfolgte durch Laser-Diffraktometrie unter Anwendung der Norm ISO13320 (2009). Die Laser-Diffraktometrie beruht auf dem Effekt, dass Partikel, die durch einen Laserstrahl gehen, das Licht in einem Winkel streuen, der in direktem Zusammenhang mit ihrer Größe steht. Mit abnehmender Partikelgröße nimmt der beobachtete Streuwinkel logarithmisch zu. Auch die Intensität der Lichtstreuung ist von der Partikelgröße abhängig; sie nimmt mit dem Partikelvolumen ab. Große Partikel streuen das Licht demzufolge mit hoher Intensität in engeren Winkeln, während kleine Partikel das Licht in breiteren Winkeln, allerdings mit geringer Intensität streuen. Die Partikelgrößenverteilung wird berechnet, indem das Streumuster einer Probe mit einem optischen Modell verglichen wird.

Eine bevorzugte Ausführungsform der Erfindung sind Granulate, die Schüttgewichte von 200 g/l bis 800 g/l aufweisen.

Die erfindungsgemäßen Granulate haben eine beige bis gelbliche Farbe und können aus ästhetischen Gründen gefärbt werden, entweder durch Vermischen der erfindungsgemäßen nichtionischen aromatischen Polyester mit Pigmenten oder Farbstoffen oder durch Zugabe eines Pigmentes oder Farbstoffes während der Synthese des Polyesters, wie in EP 2 552 994 A1 beschrieben.

Eine bevorzugte Ausführungsform der Erfindung sind Granulate die, bezogen auf das Gewicht der Granulate, eine Gesamtmenge von 5 Gew.-% bis 100 Gew.-%, bevorzugt 20 Gew.-% bis 99,99 Gew.-%, besonders bevorzugt 40 Gew.-% bis 99,90 Gew.-% des mindestens einen erfindungsgemäßen nichtionischen aromatischen Polyesters umfassen.

Diese erfindungsgemäßen Granulate zeichnen sich dadurch aus, dass sie keinen nennenswerten Feinstaubanteil haben und homogen in feste und in flüssige Zubereitungen eingearbeitet werden können.

Eine bevorzugte Ausführungsform der Erfindung sind Granulate, enthaltend die erfindungsgemäßen nichtionischen aromatischen Polyester, die in einer Polymermatrix eingearbeitet sind. Die Polymermatrix kann eine oder mehrere Polymere umfassen, die ausgewählt sind aus einem anionischen, aromatischen Polyester und/oder einem Polymer ausgewählt aus Cellulose, insbesondere Methylcellulose, Carboxymethylcellulose oder Hydroxyethylcellulose, Polyethylenglykole, beispielsweise PEG 6000, (Meth)arylsäurepolymere und -copolymere, Polymere und Copolymere der 2-Acrylamido-2-methylpropansulfonsäure, Alginate, Agar, Carrageenan, Pektin, Gelatine und Gellan Guar.

Diese erfindungsgemäßen Granulate zeichnen sich durch eine gute Abriebfestigkeit aus und können in flüssigen Zusammensetzungen als stabile Suspensionen vorliegen.

In einer bevorzugten Ausführungsform beträgt das Gewichtsverhältnis des einen oder der mehreren erfindungsgemäßen nichtionischen aromatischen Polyester zur Polymermatrix 99 zu 1 bis 10 zu 90, bevorzugt 95 zu 1 bis 20 zu 80, besonders bevorzugt 90 zu 1 bis 30 zu 70, bezogen auf die Trockenmasse des nichtionischen aromatischen Polyesters und der Polymermatrix.

Diese bevorzugte Ausführungsform der erfindungsgemäßen Granulate zeichnet sich durch ein gutes Dispergiervermögen, insbesondere in hochkonzentrierten wässrigtensidischen Zusammensetzungen aus.

In einer besonders bevorzugten Ausführungsform der Erfindung umfasst die Polymermatrix einen oder mehrere anionischen aromatischen Polyester, vorzugsweise anionische aromatische Polyester, wie in EP 1 966 273 A1, EP 0 322 647 A1, US 4,702,857 und WO 2011/063944 A1 beschrieben, besonders bevorzugt einen anionischen aromatischen Polyester, der zusätzlich zu den Struktureinheiten i), ii) und iii) die Struktureinheit, abgeleitet von der 5-Sulfoisophthalsäure, enthält.

Diese erfindungsgemäßen Granulate zeichnen sich dadurch aus, dass diese ein ausgezeichnetes Soil Release Vermögen und eine ausgezeichnete Primärwaschleistung haben und der Vergrauung der Wäsche, vorzugsweise von Polyestergewebe und Polyestermischgewebe, entgegenwirken.

Die erfindungsgemäßen Granulate können ebenso Inhaltsstoffe enthalten, ausgewählt aus einem oder mehreren von Plastifizierhilfsstoff, Enzym, Enzymstabilisator, Bleichmittel, Bleichaktivator, Bleichkatalysator, Komplexbildner für Schwermetalle, Vergrauungsinhibitor, Farbübertragungsinhibitor, Schauminhibitor, optischer Aufheller, Riechstoff und anionischem Salz.

Diese erfindungsgemäßen Granulate zeichnen sich durch eine hohe Lagerstabilität und stärkere Effektivität der Inhaltsstoffe aus.

Die erfindungsgemäßen Granulate, enthalten vorzugsweise 0,1 Gew.-% bis 95,0 Gew.-% und besonders bevorzugt 1,0 Gew.-% bis 80 Gew.-% eines oder mehrerer der vorstehend beschriebenen Inhaltsstoffe, bezogen auf das Gesamtgewicht der erfindungsgemäßen Granulate.

In einer bevorzugten Ausführungsform enthalten die erfindungsgemäßen Granulate mindestens einen Plastifizierhilfsstoff, ausgewählt aus Triethylcitrat, Triacetin, 1,2-Propylenglykol, Glyzerin, 2-Methyl-1,3-propylenglykol, Wasser oder Mischungen aus diesen.

Diese erfindungsgemäßen Granulate zeichnen sich durch eine besonders gute Abriebfestigkeit aus.

Die erfindungsgemäßen Granulate enthalten vorzugsweise 0,1 Gew.-% bis 50,0 Gew.-% und besonders bevorzugt 1,0 Gew.-% bis 30 Gew.-%, eines oder mehrerer der vorstehend beschriebenen Inhaltsstoffe, bezogen auf das Gesamtgewicht der erfindungsgemäßen Granulate.

Diese erfindungsgemäßen Granulate zeichnen sich durch eine gute Plastifizierbarkeit und durch geringe Sprödigkeit aus.

In einer weiteren bevorzugten Ausführungsform enthalten die erfindungsgemäßen Granulate einen Bleichkatalysator, vorzugsweise ein [bis (N, N'N" - Trimethyl-1,4,7-triazacyclononan)-trioxo-di-mangan-(IV)] Salz, eines Salzes von N, N'N" - Trimethyl-1,4,7-triazacyclononan, beispielsweise N, N'N" - Trimethyl-1,4,7-triazacyclononylchlorid, vorzugsweise in den Gewichtsmengen 0,1 Gew.-% bis 50,0 Gew.-% und besonders bevorzugt 1,0 Gew.-% bis 30 Gew.-% bezogen auf das Gesamtgewicht der erfindungsgemäßen Granulate. Vorzugsweise enthalten die erfindungsgemäßen Granulate einen Bleichkatalysator in Form sehr kleiner Partikel, wie in EP 3 181 677 A1 beschrieben, bevorzugt der Bleichkatalysator [bis (N, N'N" - Trimethyl-1,4,7-triazacyclononan)-trioxo-di-mangan-(IV)] PF₆, der durch volumenmittlere Teilchengrößen D97 im Bereich von 8 µm bis 35 µm gekennzeichnet ist.

Diese erfindungsgemäßen Granulate zeichnen sich durch eine gute Lagerstabilität, eine bessere Dosierbarkeit, eine gleichmäßigere Verteilung des Katalysators in der Endformulierung, und eine verbesserte Wirkung des Bleichkatalysators aus.

In einer weiteren bevorzugten Ausführungsform enthalten die erfindungsgemäßen Granulate einen Bleichkatalysator und/oder ein oder mehrere Enzyme, wie in EP 3 180 429 A1 beschrieben. Besonders bevorzugt enthalten die erfindungsgemäßen Granulate den Bleichkatalysator [bis (N, N'N" - Trimethyl-1,4,7-triazacyclononan)-trioxo-di-mangan-(IV)] PF₆ und ein oder mehrere Enzyme, ausgewählt aus Protease, Lipase, Amylase, Cellulase und Mannanase.

Diese erfindungsgemäßen Granulate zeichnen sich durch eine verbesserte Reinigungswirkung auch bei sehr geringer Dosierung des Bleichkatalysators und/oder der Enzyme aus und zeigen keine Farb- und Faserschädigungen der gereinigten Textilien und harten Oberflächen. Diese erfindungsgemäßen Granulate zeichnen sich ferner durch eine verbesserte Bleichwirkung durch eine synergistische Wirkung des Bleichkatalysators und des einen oder mehrerer der erfindungsgemäßen nichtionischen aromatischen Polyester.

Diese erfindungsgemäßen Granulate sind geeignet, um in flüssige, strukturierte tensidhaltige Zusammensetzungen, die vorzugsweise Fließgrenzen bei 25 °C im Bereich von 0,01 Pa bis 10 Pa, besonders bevorzugt 0,3 Pa bis 3 Pa, aufweisen, eingearbeitet werden zu können. Unter Fließgrenze wird in der Rheologie diejenige Schubspannung (Pascal) verstanden, unterhalb derer sich eine Zusammensetzung elastisch verformt und oberhalb derer eine irreversible, zeitabhängige, plastische Verformung, also ein Fließen stattfindet. Wässrige Suspensionen, enthaltend die erfindungsgemäßen Granulate zeichnen sich dadurch aus, dass diese Granulate homogen in der Suspension verteilt sind und bei Lagerung weder absinken noch aufschwimmen.

Ein weiterer Aspekt der vorliegenden Erfindung betrifft wässrige Zusammensetzungen enthaltend einen oder mehrere der erfindungsgemäßen nichtionischen aromatischen Polyester.

Die erfindungsgemäßen nichtionischen aromatischen Polyester zeichnen sich durch eine sehr gute Wasserlöslichkeit und Hydrolysestabilität aus und können leicht in wässrige Zusammensetzungen eingearbeitet werden. Die erfindungsgemäßen nichtionischen aromatischen Polyester zeichnen sich ferner durch eine sehr gute Wasserlöslichkeit und ein hohes Dispergiervermögen aus und sind bevorzugt zur Herstellung von wässrigen Pigmentdispersionen geeignet.

Sehr vorteilhaft ist, dass diese erfindungsgemäßen nichtionischen aromatischen Polyester auch in hohen Konzentration in Wasser löslich sind und keine Phasenseparation auftritt.

Eine weitere bevorzugte Ausführungsform der Erfindung sind wässrige Zusammensetzungen enthaltend 10 Gew.-% bis 70 Gew.-% der erfindungsgemäßen nichtionischen aromatischen Polyester, bezogen auf die wässrige Zusammensetzung.

Die erfindungsgemäßen nichtionischen aromatischen Polyester sind auch in Tensidhaltigen wässrig-flüssigen Zusammensetzungen lagerstabil.

Ein weiterer Vorteil ist, dass durch Verwendung der erfindungsgemäßen nichtionischen aromatischen Polyester, sowohl in festen, als auch in flüssigen Wasch- und Reinigungsmittel der Gehalt an Tensiden reduziert werden kann, ohne eine Verschlechterung des Wasch- und Reinigungsergebnisses hinnehmen zu müssen.

Eine weitere bevorzugte Ausführungsform der Erfindung sind wässrige Zusammensetzungen, enthaltend neben den erfindungsgemäßen nichtionischen aromatischen Polyester ferner ein oder mehrere Tenside.

Die erfindungsgemäßen nichtionischen aromatischen Polyester zeichnen sich weiter dadurch aus, dass sie in flüssigen Zusammensetzungen mit hohen Tensidkonzentrationen > 25 Gew.-% bezogen auf die flüssige Zusammensetzung und einem Wasseranteil von < 50 Gew.-%, bevorzugt < 40 Gew.-%, besonders bevorzugt < 25 Gew.-%, bezogen auf den Gewichtsanteil der flüssigen Zusammensetzung als solche stabil sind und über mehrere Wochen in der flüssigen Zusammensetzung oder als homogene Suspension in der flüssigen Zusammensetzung vorliegen.

Ein weiterer Aspekt der vorliegenden Erfindung sind Wasch- und Reinigungsmittel, enthaltend einen oder mehrere der erfindungsgemäßen nichtionischen aromatischen Polyester, wobei die Wasch- und Reinigungsmittel fest und/oder flüssig sind.

Diese erfindungsgemäßen Wasch- und Reinigungsmittel können insbesondere flüssig, fest in Form von Pulvern, Granulaten oder tablettenförmig oder auch als Pouches (Beutel) oder Mehrkammersysteme dargeboten werden.

Die erfindungsgemäßen nichtionischen aromatischen Polyester können bevorzugt mit weiteren Bestandteilen zur Herstellung von festen Zusammensetzungen oder Dispersionen, vorzugsweise Suspensionen, verwendet werden.

Die erfindungsgemäßen nichtionischen aromatischen Polyester können bevorzugt mit weiteren Bestandteilen tablettenförmig verpresst werden.

Die erfindungsgemäßen nichtionischen aromatischen Polyester eignen sich zur Herstellung von festen und flüssigen Wasch- und Reinigungsmittel, die flüssig, fest in Form von Pulvern, Granulaten oder Tablettenförmig oder auch als Pouches (Beutel) oder Mehrkammersysteme dargeboten werden.

Ein weiterer Aspekt der Erfindung betrifft Wasch- und Reinigungsmittel enthaltend die erfindungsgemäßen nichtionischen aromatischen Polyester.

Die festen und flüssigen Wasch- und Reinigungsmittel, sowie Wasch- und Reinigungsmittel in Mehrkammersystemen und Pouches, enthaltend die erfindungsgemäßen nichtionischen aromatischen Polyester enthalten vorzugsweise mindestens 0,01 Gew.-%, vorzugsweise zwischen 0,1 Gew.-% und 10 Gew.-% und besonders bevorzugt 0,2 Gew.-% bis 3 Gew.-%, außerordentlich bevorzugt 1,0 bis 2,0 Gew.-% eines oder mehrerer der vorstehend beschriebenen nichtionischen aromatischen Polyester, bezogen auf das Gesamtgewicht des Wasch- und Reinigungsmittels.

Bevorzugt kann durch Verwendung der erfindungsgemäßen nichtionischen aromatischen Polyester, sowohl in festen als auch in flüssigen Wasch- und Reinigungsmittel, sowie in Wasch- und Reinigungsmittel in Mehrkammersystemen und Pouches die Anti-Redepositionwirkung erhöht und die Wiederanschmutzung reduziert werden.

Ebenso bevorzugt kann durch Verwendung der erfindungsgemäßen nichtionischen aromatischen Polyester, sowohl in festen als auch in flüssigen Wasch- und Reinigungsmittel, sowie in Mehrkammersystemen und Pouches der Gehalt an Tensiden um 2 Gew.-% bis 10 Gew.-%, bezogen auf das Wasch- und Reinigungsmittel reduziert werden.

Ein weiterer Aspekt der Erfindung ist die Verwendung der erfindungsgemäßen nichtionischen aromatischen Polyester zur Herstellung von Wasch- und Reinigungsmittel.

Beispiele hierfür sind Vollwaschmittel, Feinwaschmittel, Colorwaschmittel, Wollwaschmittel, Gardinenwaschmittel, Baukastenwaschmittel, Waschtabletten, sog. "bar soaps" (klassische Seifenstücke), Fleckensalze, Wäschestärken und Wäschesteifen und Bügelhilfen.

Die erfindungsgemäßen nichtionischen aromatischen Polyester können auch in Haushaltsreinigungsmitteln, beispielsweise in Allzweckreinigern, oder in Geschirrspülmitteln, in Teppichreinigungsmitteln und Imprägniermitteln, in Reinigungs- und Pflegemitteln für Böden und andere harte Oberflächen, z.B. aus Kunststoff, Keramik, Glas oder mit Nanotechnologie beschichtete Oberflächen eingearbeitet werden.

Die erfindungsgemäßen nichtionischen aromatischen Polyester wirken als gute Anti-Spottingmittel, insbesondere auf Glasoberflächen, und bewirken einen guten Glanz, insbesondere auf Metalloberflächen. Zudem zeigen Oberflächenreiniger, insbesondere Oberflächenreiniger zum Reinigen von Kunststoff- oder Keramikoberflächen, enthaltend die erfindungsgemäßen anionischen aromatischen Polyester, eine deutlich reduzierten Wiederanschmutzungseffekt. Mit diesen Oberflächenreinigern gereinigte Oberflächen sind leichter zu reinigen und Kalkablagerungen sind reduziert.

Die erfindungsgemäßen nichtionischen aromatischen Polyester können die hydrophoben Oberflächen von verklebenden Verunreinigungen, die im Papierrecyclingprozess im sogenannten Pulp vorliegen, hydrophiler und die Ablagerungstendenzen der klebrigen Teilchen auf hydrophoben Oberflächen, beispielsweise Siebe, Filze und Walzen reduzieren.

Ein weiterer Aspekt der vorliegenden Erfindung ist die Verwendung der erfindungsgemäßen nichtionischen aromatischen Polyester in Verfahren zur Papierherstellung oder in Verfahren zum Papierrecycling.

Die Verwendung der erfindungsgemäßen nichtionischen aromatischen Polyester kann in der Weise erfolgen, dass diese Verfahren zur Papierherstellung oder in Verfahren zum Papierrecycling der Papierfasermasse in Mengen von bevorzugt 200 g bis 1.000 g pro Tonne trockener Papierfaser zugeführt und dort homogen verteilt wird und zur Wirkung kommt. Die Zugabe der erfindungsgemäßen nichtionischen aromatischen Polyester erfolgt in Form einer wässrigen Dispersion, bevorzugt als 20 %ige wässrige Dispersion. Die Mengenangabe bezieht sich auf 100 % Polyester.

Die Verwendung der erfindungsgemäßen nichtionischen aromatischen Polyester kann auch in der Weise erfolgen, dass während des Verfahrens zur Papierherstellung oder des Verfahrens zum Papierrecycling Oberflächen, beispielsweise von Walzen oder Filzen, mit wässrigen Lösungen, enthaltend die erfindungsgemäßen nichtionischen aromatischen Polyester, besprüht werden. Diese wässrigen Lösungen enthalten die erfindungsgemäßen Polyester, bevorzugt in Gewichtsmengen von 0,01 % bis 0,05 %, bezogen auf die Sprühlösung

Ein weiterer Aspekt der Erfindung betrifft die Verwendung der erfindungsgemäßen nichtionischen aromatischen Polyester zur Herstellung von Pigmentdispersionen.

Die erfindungsgemäßen nichtionischen aromatischen Polyester eignen sich zur Herstellung von Pigmentdispersionen, die auch in hohen Konzentrationen an festen Pigmentbestandteilen pumpbar und phasenstabil sind. Die Herstellung kann in der in EP 1 805 270 A1 beschriebenen Weise erfolgen.

Ein weiterer Aspekt der Erfindung betrifft Pigmentdispersionen, enthaltend die erfindungsgemäßen nichtionischen aromatischen Polyester.

Ein weiterer Aspekt der vorliegenden Erfindung betrifft die Verwendung der erfindungsgemäßen nichtionischen aromatischen Polyester zur Verbesserung des Druckverhaltens von ölbasierenden Druckfarben auf hydrophoben Oberflächen.

Die erfindungsgemäßen nichtionischen aromatischen Polyester können die Grenzflächenspannung zwischen Druckfarbe und Feuchtwasser reduzieren und das Druckverhalten von ölbasierenden Druckfarben auf hydrophoben Oberflächen verbessern.

Weitere Ziele, Merkmale, Vorteile und Anwendungsmöglichkeiten ergeben sich aus der nachfolgenden Beschreibung von die Erfindung nicht einschränkenden Ausführungsbeispielen. Dabei bilden alle beschriebenen und/oder anderweitig dargestellten Merkmale für sich oder in beliebiger Kombination den Gegenstand der Erfindung, auch unabhängig von ihrer Zusammenfassung in den Ansprüchen oder deren Rückbeziehung.

### Synthese

Die Synthese der erfindungsgemäßen nichtionischen aromatischen Polyester erfolgte nach an sich bekannten Verfahren, indem die unter i) bis iii) und optional gegebenenfalls weitere Komponenten unter Zusatz eines Katalysators zunächst bei Normaldruck auf Temperaturen von 160 °C bis etwa 220 °C unter Verwendung einer inerten Atmosphäre erhitzt wurden. Dann wurden die erforderlichen Molekulargewichte im Vakuum bei Temperaturen von 160 °C bis etwa 220 °C durch Abdestillieren überstöchiometrischer Mengen der eingesetzten Glykole aufgebaut. Für die Reaktion eignen sich die bekannten Veresterungs- und Umesterungs-Katalysatoren des Standes der Technik, wie beispielsweise Titantetraisopropylat, Dibutylzinnoxid, Alkali- oder Erdalkalimetallalkoholate oder Antimontrioxid / Calciumacetat.

### Beispiele

### Beispiel 1: Polyester 1

In einem 1 l Vierhaltskolben mit KPG-Rührer, Innenthermometer, Vigreux-Kolonne, Destillationsbrücke, N2-Überleitung (5 l/h) und Anschütz-Thiele-Vorstoß wurden 164,4 g (0,85 Mol) Terephthalsäuredimethylester, 87,6 g (0,6 Mol) Isosorbid, 45,7 g (0,6 Mol) 1,2-Propandiol, 29,5 g (0,475 Mol), Ethylenglykol, 1,14 g (0,008 Mol) Pentaerytrit und 0,75 g (0,0009 Mol) Natriumacetat vorgelegt und das Reaktionsgemisch anschließend unter N2-Überlagerung (5 l/h), auf 60 °C Innentemperatur unter Rühren bei einer Rührgeschwindigkeit von 50 U/min bis 100 U/min, hochgeheizt. Nach Schließung der N2-Überlagerung wurden 0,2 g (0,0007 Mol) Titantetraisopropylat zugegeben. Anschließend wurde die Rührgeschwindigkeit auf 300 U/min erhöht und der Ansatz innerhalb von 2 h auf eine Innentemperatur von 150 °C und in weiteren 2 h auf eine Innentemperatur von 200° C hochgeheizt. Ab einer Innentemperatur von 170 °C wurde die N2-Überlagerung wieder geöffnet. Das Reaktionsgemisch wurde 2 h bei 200 °C erhitzt und entstehendes Methanol abdestilliert, das in einer mit Eis gekühlten Vorlage kondensiert wurde. Anschließend wurde die Reaktionsmischung auf Raumtemperatur abgekühlt und 328,7 g (0,219 Mol) Polyethylenglykol 1500 und 137,8 g (0,11 Mol) Polyethylenglykolmonomethylester 1250 zugegeben. Die Mischung wurde unter und N2-Überlagerung (5 l/h), auf 215 °C Innentemperatur unter Rühren bei einer Rührgeschwindigkeit von 300 U/ min, hochgeheizt, die N2-Überleitung geschlossen und der Druck innerhalb von 2 h auf 150 mbar und innerhalb von weiteren 2 h auf 10 mbar gesenkt und währenddessen Glykol abdestilliert. Es wurde 2 h bei 215 °C und 10 mbar nachkondensiert und anschließend auf 140 °C bis 150 °C abgekühlt. Anschließend wurde mit N2 belüftet und die heiße Schmelze ausgetragen. Es wurde eine erstarrte, beige Polymerschmelze erhalten.

Analog zu Beispiel 1 können mit folgenden Ausgangsstoffen die erfindungsgemäßen nichtionischen aromatischen Polyester hergestellt werden:

### Beispiel 2

164,4 g Terephthalsäuredimethylester
124,1 g Isosorbid
960,4 g CH₃-(OC₂H₄)₄₅(OC₃H₇)₇OH
0,75 g Natriumacetat
0,2 g Titantetraisopropylat

### Beispiel 3

164,4 g Terephthalsäuredimethylester
124,1 g Isosorbid
300 g Methylpolyethylenglykol 750
0,75 g Natriumacetat
0,2 g Titantetraisopropylat

### Beispiel 4

164,4 g Terephthalsäuredimethylester
124,1 g Isosorbid
120 g Methylpolyethylenglykol 300
0,75 g Natriumacetat
0,2 g Titantetraisopropylat

### Beispiel 5

164,4 g Terephthalsäuredimethylester
1488 g Ethylenglycol
64,7 g 1,2-Propylenglykol
124,1 g Isosorbid
910 g Methylpolyethylenglykol 1820
0,75 g Natriumacetat
0,2 g Titantetraisopropylat

### Beispiel 6

In einem 1 l-Vierhalskolben mit KPG-Rührer, 20 cm Vigreux-Kolonne mit Claisen-Brücke, Innenthermometer und Gaseinleitungsrohr wurden 194,2 g Dimethylterephthalat, 39,8 g Ethylenglykol, 22,8 g 1,2-Propylenglykol, 146,0 g Isosorbid, 9,2 g Glycerin, 0,37 g wasserfreies Natriumacetat und 0,19 g Titantetraisopropylat vorgelegt. Dann wurde mit Stickstoff inertisiert und innerhalb einer halben Stunde auf 165 °C bis 167 °C erhitzt. Innerhalb von weiteren 2,5 h wurde die Temperatur auf 215 °C bis 220 °C erhöht. Bei ca. 165 °C Innentemperatur begann die Umesterung und somit die Destillation von Methanol. Nach ca. 5 h waren > 98 % der zu erwartenden Methanolmenge abdestilliert. Der Ansatz wurde auf ca. 80 °C abgekühlt, dann wurden 72,0 g Methylpolyethylenglykol 750, 91,2 g Methylpolyethylenglykol 1820 und 387,5 g Polyethylenglykol 1500 zugegeben. Der Kolben wurde wiederum inertisiert und auf 200 °C bis 220 °C aufgeheizt, dann wurde im Verlaufe von ca. 1 h der Druck auf 1 mbar bis 5 mbar abgesenkt und bei 220 °C bis 240 °C weitere 2 h bis 5 h kondensiert, wobei ein Gemisch aus Ethylenglykol und 1,2-Propylenglykol abdestillierte. Nach Beendigung der Kondensation wurde mit Stickstoff belüftet und abgekühlt.

## Patentansprüche

1. Nichtionische aromatische Polyester, enthaltend
i) mindestens eine Struktureinheit der Formel (I) 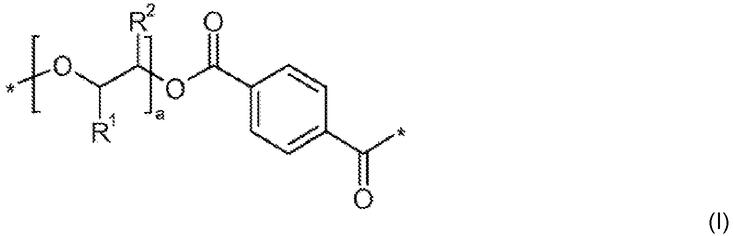 worin
R¹, R² unabhängig voneinander jeweils für Wasserstoff oder eine C₁-C₄-Alkylgruppe steht,
a für eine Zahl von 0 bis 20 steht
ii) mindestens eine Struktureinheit der Formel (IIa) und/oder (IIb)
-(-CH₂-CH₂-O-)_{b}-(-CHR³-CHR⁴-O)_{c}-R⁵ (IIa)
-(-CHR³-CHR⁴-O-)_{c}-(-CH₂-CH₂-O)b-R⁵ (IIb)
worin
R³, R⁴ unabhängig voneinander jeweils für Wasserstoff oder eine C₁-C₄-Alkylgruppe steht,
R⁵ für eine C₁-C₂₂-n-Alkylgruppe oder C₃-C₂₂-iso-Alkylgruppe steht,
b, c unabhängig voneinander jeweils für eine Zahl von 1 bis 60 stehen,
wobei die Gruppen der Formel (IIa) und/oder (IIb) statistisch verteilt oder blockweise angeordnet sein können,
iii) mindestens eine Struktureinheit, abgeleitet von Isosorbid der Formel (III) 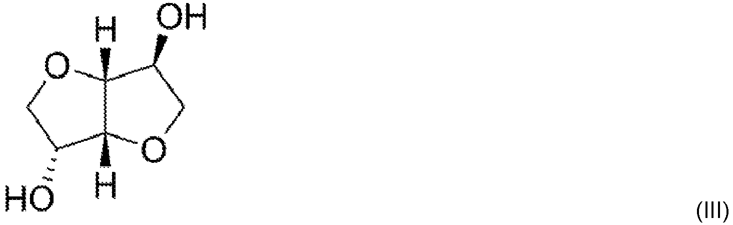 wobei in dem nichtionischen aromatischen Polyester 4 bis 9 Struktureinheiten der Formel (I) vorhanden sind.

2. Nichtionische aromatische Polyester nach Anspruch 1, wobei das Molverhältnis von i) zu iii) 30 zu 1 bis 1 zu 10, bevorzugt 20 zu 1 bis 1 zu 5, besonders bevorzugt 15 zu 1 bis 1 zu 3 ist.

3. Nichtionische aromatische Polyester nach Anspruch 1 oder 2, enthaltend ferner Struktureinheiten, abgeleitet von einem oder mehreren Polyethylenglykolen mit zahlenmittleren Molekulargewichten von ca. 200 g/mol bis 8.000 g/mol und/oder von einem oder mehreren Polypropylenglykolen mit zahlenmittleren Molekulargewichten von ca. 200 g/mol bis 8.000 g/mol und/oder von einem oder mehreren Polypropylenethylenglykol mit zahlenmittleren Molekulargewichten von ca. 200 g/mol bis 8.000 g/mol enthalten.

4. Granulate, enthaltend einen oder mehrere der nichtionischen aromatischen Polyester nach einem der Ansprüche 1 bis 3, wobei die Granulate einen mittleren Durchmesser X_{50,3} von 0,05 mm bis 2 mm, bevorzugt 0,08 mm bis 1,8 mm, besonders bevorzugt 0,1 mm bis 1,5 mm, aufweisen, wobei der mittlere Durchmesser X_{50,3} mittels des in der Beschreibung angegebenen Verfahrens bestimmt wird.

5. Wässrige Zusammensetzungen, enthaltend einen oder mehrere der nichtionischen aromatischen Polyester nach einem der Ansprüche 1 bis 3.

6. Wasch- und Reinigungsmittel, enthaltend einen oder mehrere der nichtionischen aromatischen Polyester nach einem der Ansprüche 1 bis 3, wobei die Wasch- und Reinigungsmittel fest und/oder flüssig sind.

7. Verwendung der nichtionischen aromatischen Polyester nach einem der Ansprüche 1 bis 3 zur Herstellung von Wasch- und Reinigungsmitteln.

8. Verwendung der nichtionischen aromatischen Polyester nach einem der Ansprüche 1 bis 3 in Verfahren zur Papierherstellung oder in Verfahren zum Papierrecycling.

9. Verwendung der nichtionischen aromatischen Polyester nach einem der Ansprüche 1 bis 3 zur Herstellung von Pigmentdispersionen.

10. Verwendung der nichtionischen aromatischen Polyester nach einem der Ansprüche 1 bis 3 zur Verbesserung des Druckverhaltens von ölbasierenden Druckfarben auf hydrophoben Oberflächen.

## Claims

1. Non-ionic aromatic polyesters comprising
i) at least one structural unit of the formula (I) 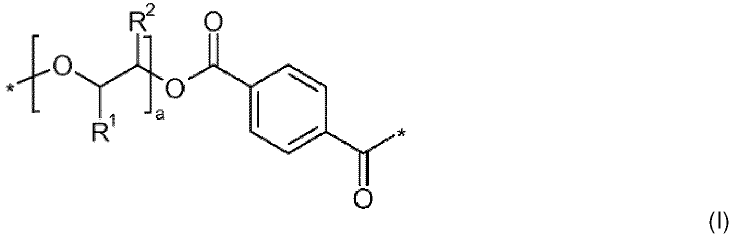 wherein
R¹, R² independently of one another each represent hydrogen or a a C₁ - C₄ alkyl group,
a is a number from 0 to 20
ii) at least one structural unit of the formula (IIa) and/or (IIb)
-(-CH₂-CH₂-O-)_{b}-(-CHR³-CHR⁴-O)_{c}-R⁵ (IIa)
-(-CHR³-CHR⁴-O-)_{c}-(-CH₂-CH₂-O)b-R⁵ (IIb)
wherein
R³, R⁴ independently of one another each represents hydrogen or a C₁ - C₄ alkyl group,
R⁵ represents a C₁-C₂₂-n-alkyl group or C₃-C₂₂-isoalkyl group,
b, c independently of one another each represent a number from 1 to 60,
wherein the groups of formula (IIa) and/or (IIb) may be randomly distributed or arranged in blocks,
iii) at least one structural unit derived from isosorbide of the formula (III) 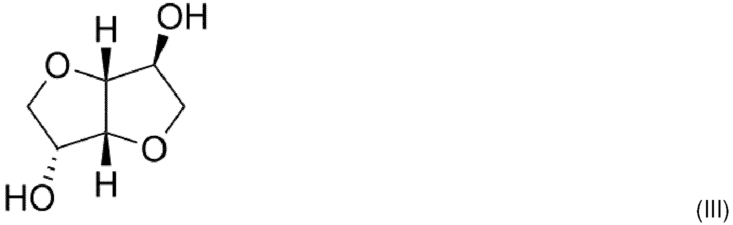 wherein 4 to 9 structural units of formula (I) are present in the nonionic aromatic polyester.

2. Non-ionic aromatic polyesters according to claim 1, wherein the molar ratio of i) to iii) is 30 to 1 to 1 to 10, preferably 20 to 1 to 1 to 5, particularly preferably 15 to 1 to 1 to 3.

3. Non-ionic aromatic polyesters according to claim 1 or 2, further comprising structural units derived from one or more polyethylene glycols having number-average molecular weights of from about 200 g/mol to 8,000 g/mol and/or from one or more polypropylene glycols having number-average molecular weights of from about 200 g/mol to 8,000 g/mol and/or from one or more polypropylene ethylene glycols having number-average molecular weights of from about 200 g/mol to 8,000 g/mol.

4. Granules comprising one or more of the nonionic aromatic polyesters according to any one of claims 1 to 3, wherein the granules have an average diameter X50.3 of 0.05 mm to 2 mm, preferably 0.08 mm to 1.8 mm, more preferably 0.1 mm to 1.5 mm, wherein the average diameter X50.3 is determined by means of the method given in the description.

5. Aqueous compositions comprising one or more of the non-ionic aromatic polyesters according to any one of claims 1 to 3.

6. Washing and cleaning compositions comprising one or more of the nonionic aromatic polyesters according to any one of claims 1 to 3, wherein the washing and cleaning compositions are solid and/or liquid.

7. Use of the non-ionic aromatic polyesters according to any one of claims 1 to 3 for the preparation of washing and cleaning compositions.

8. Use of the non-ionic aromatic polyesters according to any one of claims 1 to 3 in processes for paper production or in processes for paper recycling.

9. Use of the non-ionic aromatic polyesters according to any one of claims 1 to 3 for the production of pigment dispersions.

10. Use of the non-ionic aromatic polyesters according to any one of claims 1 to 3 for improving the printing behaviour of oil-based printing inks on hydrophobic surfaces.

## Revendications

1. Polyester aromatique non ionique contenant
i) au moins un motif de la formule (I) 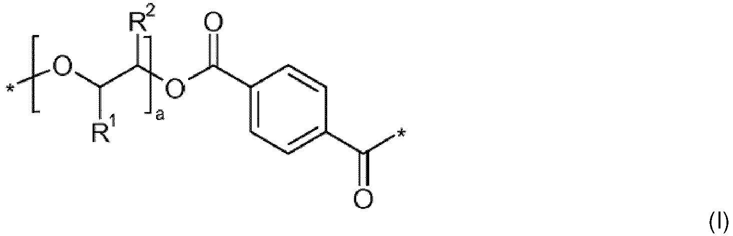 dans laquelle
R1, R2 désignent indépendamment l'un de l'autre respectivement de l'hydrogène ou un groupe alkyle en C1-C4,
a désigne un nombre de 0 à 20,
ii) au moins un motif de la formule (Ila) et/ou (IIb)
-(-CH₂-CH₂-O-)_{b}-(-CHR³-CHR⁴-O)_{c}-R⁵ (IIa)
-(-CHR³-CHR⁴-O-)_{c}-(-CH₂-CH₂-O)b-R⁵ (IIb)
dans laquelle
R³, R⁴ désignent indépendamment l'un de l'autre respectivement de l'hydrogène ou un groupe alkyle en C₁-C₄,
R⁵ désigne un groupe n-alkyle en C₁-C₂₂ ou un groupe iso-alkyle en C₃-C₂₂,
b, c désignent indépendamment l'un de l'autre un nombre de 1 à 60,
dans lequel les groupes des formules (Ila) et/ou (IIb) peuvent être disposés de manière répartie statistiquement ou par blocs,
iii) au moins un motif dérivé de l'isosorbide de la formule (III) 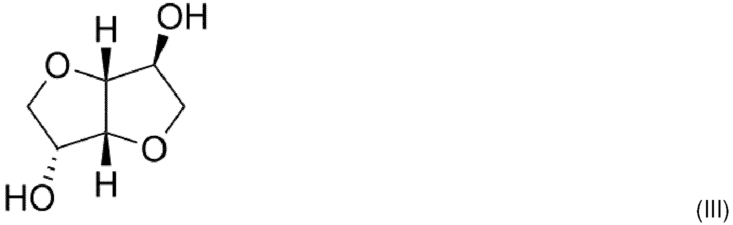 dans lequel 4 à 9 motifs de la formule (I) sont présents dans le polyester aromatique non ionique.

2. Polyester aromatique non ionique selon la revendication 1, dans lequel le rapport molaire de i) par rapport à iii) va de 30 : 1 à 1 : 10, de manière préférée de 20 : 1 à 1 : 5, de manière particulièrement préférée de 15 : 1 à 1 : 3.

3. Polyester aromatique non ionique selon la revendication 1 ou 2, contenant en outre des motifs dérivés d'un ou de plusieurs glycols de polyéthylène avec des poids moléculaires moyens en nombre d'environ 200 g/mol à 8000 g/mol et/ou d'un ou de plusieurs glycols de polypropylène avec des poids moléculaires moyens en nombre d'environ 200 g/mol à 8000 g/mol et/ou d'un ou de plusieurs glycols de polyéthylène-polypropylène avec des poids moléculaires moyens en nombre d'environ 200 g/mol à 8000 g/mol.

4. Granulés contenant un ou plusieurs des polyesters aromatiques non ioniques selon l'une quelconque des revendications 1 à 3, dans lesquels les granulés présentent un diamètre moyen X_{50,3} de 0,05 mm à 2 mm, de manière préférée de 0,08 mm à 1,8 mm, de manière particulièrement préférée de 0,1 mm à 1,5 mm, dans lesquels le diamètre moyen X_{50,3} est défini au moyen du procédé indiqué dans la description.

5. Compositions aqueuses contenant un ou plusieurs des polyesters aromatiques non ioniques selon l'une quelconque des revendications 1 à 3.

6. Produits de lavage ou de nettoyage contenant un ou plusieurs des polyesters aromatiques non ioniques selon l'une quelconque des revendications 1 à 3, dans lesquels les produits de lavage et de nettoyage sont solides et/ou liquides.

7. Utilisation des polyesters aromatiques non ioniques selon l'une quelconque des revendications 1 à 3 pour fabriquer des produits de lavage et de nettoyage.

8. Utilisation des polyesters aromatiques non ioniques selon l'une quelconque des revendications 1 à 3 dans des procédés de fabrication de papier ou dans des procédés de recyclage de papier.

9. Utilisation des polyesters aromatiques non ioniques selon l'une quelconque des revendications 1 à 3 pour fabriquer des dispersions de pigments.

10. Utilisation des polyesters aromatiques non ioniques selon l'une quelconque des revendications 1 à 3 pour améliorer le comportement d'impression d'encres d'impression à base d'huile sur des surfaces hydrophobes.
